# EUROPEAN PATENT SPECIFICATION

(11) **EP 2 439 881 B1**
(45) Date of publication and mention of the grant of the patent: **07.08.2019**
(21) Application number: 10796693.9
(22) Date of filing: 07.06.2010
(51) Int. Cl.: H04L 12/24, H04W 4/08, H04L 29/08, H04L 29/14

(54) **CLUSTER SYSTEM AND REQUEST MESSAGE DISTRIBUTION METHOD FOR PROCESSING MULTI-NODE TRANSACTION**
CLUSTERSYSTEM UND ABFRAGEMELDUNGSVERTEILUNGSVERFAHREN ZUR VERARBEITUNG VON MEHRKNOTENTRANSAKTIONEN
SYSTÈME DE GRAPPE ET PROCÉDÉ DE DÉLIVRANCE DE MESSAGE DE REQUÊTE POUR TRANSACTION À NOEUDS DE TRAITEMENT MULTIPLES

(30) Priority: 08.07.2009 CN 200910151954
(43) Date of publication of application: 11.04.2012
(73) Proprietor: ZTE Corporation, Shenzhen, Guangdong 518057 (CN)
(72) Inventor: HUANG, Xiaojun, Shenzhen Guangdong 518057 (CN); SHI, Meikang, Shenzhen Guangdong 518057 (CN)
(74) Representative: Aipex B.V.
(86) International application number: PCT/CN2010/073645
(87) International publication number: WO 2011/003316

(56) References cited:
- EP-A1- 1 867 130
- CN-A- 1 545 281
- CN-A- 1 728 098
- CN-A- 101 141 301
- CN-A- 101 309 167
- CN-A- 101 309 167
- CN-A- 101 605 301
- US-A1- 2002 161 839
- US-A1- 2004 024 881
- US-A1- 2004 243 709

## Description

### Technical Field

The present invention relates to the field of wireless communication, and in particular, to a cluster system and request message distribution method for processing multi-node transaction.

### Background of the Related Art

To solve the problem of system performance in the field of application system, when performance of a single set of equipment is optimized to the limit, if it can not meet the performance requirement yet, a method of a cluster system is commonly used to extend the whole performance of the system. The cluster system includes a transaction distribution server responsible for cluster distribution and a transaction processing server responsible for processing service logic. The transaction distribution server is mainly responsible for receiving messages from external systems and distributing them to the transaction processing server according to a certain rules, and is further responsible for receiving response messages from the transaction processing server and assembling them into reply messages to return to the external systems. The transaction processing server is responsible for receiving messages sent by the transaction distribution server, performing service logic processing and returning the processing result to the transaction distribution server.

In some application systems, there is association in processing of messages. A complete procedure includes multiple processing of associated messages. An association identifier of an associated message may be generated by the external system and then transmitted to the application system, or may be generated by the application system itself. After being generated, the association identifier is transferred in subsequent association procedures. Such association procedures retain related data in a memory of the transaction processing server for the subsequent procedures to obtain and use. The associated messages need to be processed in the same transaction processing server, so the transactional problem of a plurality of associated messages is required to be solved in the cluster system. The transactional application system can implement multi-node cluster only when the transactional problem of the associated messages is solved, so as to expend efficiently the processing capability of the application system.

In a general application system, in order to guarantee security, a dual device mode is basically used. The biggest drawback of the dual device mode is the waste of resources, specifically, one device is always in an idle state, and the other device is in an inactive state for a long time such that normal switching can not be completed when a standby state is required to be switched to in the case of abnormality, thus influencing the operation of the system.

The document EP 1867130 A1 discloses a method of handling incoming service requests in an application server comprising a set of equal traffic modules, each being capable of handling requests for one or more multimedia services implemented in the application server, wherein each traffic module is associated with a specific port number corresponding to an internal private network address of the traffic module.

The document CN 101309167 A discloses a disaster recovery system based on cluster backup, which comprises: a load agent unit and a load service unit; the load service unit comprises at least two server nodes, each server node comprises a local database and each server node is connected with each other.

The document US 2002/0161839 A1 discloses method of maintaining session affinity in a server farm coupled to receive client requests, said server farm comprising multiple server groups, each server group comprising multiple clone servers, said method comprising the steps of: (1) associating a collection of related client requests with a unique session identification code; (2) responsive to receipt of a client request, determining to which of said server groups said client request can be dispatched; (3) associating with said collection of requests sharing a session identification code a list of every server in said server farm that has serviced a request in said collection; (4) responsive to receipt of a client request, determining if said list associated with said collection of requests to which said request belongs includes a server identification code that matches a server identification code of a server in said determined server group; and (5) if a match is detected, dispatching said client request to said matched server.

The document US 2004/0243709 A1 discloses a method, comprising: receiving an initial request from a client, wherein the initial request initiates a session; relaying the initial request to a selected node, wherein the selected node is part of a cluster of multiple nodes, and wherein the cluster is one of a plurality of clusters in a distributed system; receiving a subsequent request, wherein the subsequent request pertains to the same session; determining if the selected node is active; if the selected node is active, relaying the subsequent request to the selected node; and if the selected node is not active: determining the identity of the selected node's cluster wherein said determining the identity of selected node's cluster comprises examining a cluster mapping table, wherein the cluster mapping table indicates which nodes are associated with which clusters; and relaying the subsequent request to another node in the same cluster as the selected node.

The document US 2004/0024881 A1 discloses a system for sticky routing of requests within a server farm. The system has a load balancer that receives client requests, selects a server and generates a session ID for each client request not related with an already established session. The system sends the request with unique information identifying both the server and the session to the selected server and client, respectively. Subsequently received requests include a session ID and one or more unique server IDs so that the system can determine where to send the request in the server farm, thus enabling sticky routing for requests associated with a given session across multiple tiers of nodes within a server farm.

### Summary of the Invention

A technical problem to be solved by the invention is to provide a cluster system and request message distribution method for processing multi-node transaction so as to ensure the security and reliability of the system processing the multi-node transaction.

To solve the above technical problem, a system according to claim 1 and a method according to claim 5 are provided. Further improvements and embodiments are provided in the dependent claims..

Also provided is a cluster system for processing multi-node transaction comprising a transaction distribution server and transaction processing servers which are connected to the transaction distribution server, wherein
the transaction distribution server is configured to determine whether a request message received from an external system is an initial request message, and if yes, analyze an association code carried in the initial request message, select a transaction processing server based on the association code, and transmit the initial request message to the selected transaction processing server; and
the transaction processing server is configured to process the request message from the transaction distribution server.

The transaction distribution server is further configured to, when determining that the request message is a non-initial request message, transmit the non-initial request message to a transaction processing server configured to process an initial request message associated with the non-initial request message.

The transaction distribution server is further configured to, after determining that the request message is the non-initial request message, analyze an association code carried in the non-initial request message, and when determining that the association code is generated by an external system, select a transaction processing server based on the association code and transmit the non-initial request message to the selected transaction processing server.

The transaction processing server is further configured to generate an association code used to identify a subsequent non-initial request message based on its own number when processing the initial request message; and
the transaction distribution server is further configured to, after determining that the request message is the non-initial request message, analyze the association code carried in the non-initial request message, and when determining that the association code is generated by a transaction processing server, select the transaction processing server based on the association code and transmit the non-initial request message to the selected transaction processing server.

The transaction processing server is further configured to generate a transaction association identifier as the association code when the cluster system is a telecommunication value-added service cluster system and the received initial request message is an on demand type service message; and generate a secondary confirmation access code as the association code when the received initial request message is an order type service message; and generate a combined service serial number as the association code when the received initial request message is a combination type service message.

A mapping relationship between the association code and the transaction processing server specifically means that one or more of bits of the association code correspond to a transaction processing server number.

The transaction distribution server adopts a dual device mode, the transaction processing servers adopt a single device mode, and the transaction processing servers are spare parts for each other.

Also provided is a request message distribution method for processing multi-node transaction comprising:
a transaction distribution server transmitting a request message received from an external system to a selected transaction processing server, and determining whether the request message is an initial request message or a non-initial request message;
when the request message is the initial request message, analyzing an association code carried in the initial request message, selecting the transaction processing server based on the association code, and transmitting the initial request message to the selected transaction processing server; and
the transaction processing server processing the request message received from the transaction distribution server.

The method further comprises:
when determining that the request message is the non-initial request message, the transaction processing server transmitting the non-initial request message to a transaction processing server configured to process an initial request message associated with the non-initial request message;
the specific transmitting process comprising: analyzing an association code carried in the non-initial request message, and when it is determined that the association code is generated by an external system, selecting a transaction processing server based on the association code and transmitting the non-initial request message to the selected transaction processing server.

The method further comprises:
the transaction processing server generating an association code used to identify a subsequent non-initial request message based on its own number when processing the initial request message;
the transaction distribution server, after determining that the request message is the non-initial request message, analyzing the association code carried in the non-initial request message, and when determining that the association code is generated by a transaction processing server, selecting the transaction processing server based on the association code and transmitting the non-initial request message to the selected transaction processing server.

The invention may extend the processing capability of the application system, reduce the construction cost of the system, and ensure the security and reliability of the system, while solving the problem of distribution of association messages in a transactional cluster system to ensure the normal operation and reliability of the multi-node transactional cluster system.

### Brief Description of Drawings

FIG. 1 is a schematic diagram of a composition structure of a cluster system for processing multi-node transaction in accordance with an embodiment;
FIG. 2 is a flowchart of a method for a cluster system to distribute request messages in accordance with an embodiment; and
FIG. 3 is a flowchart of a method for a telecommunication value-added service cluster system to distribute request messages in accordance with a specific embodiment.

### Preferred Embodiments of the Present Invention

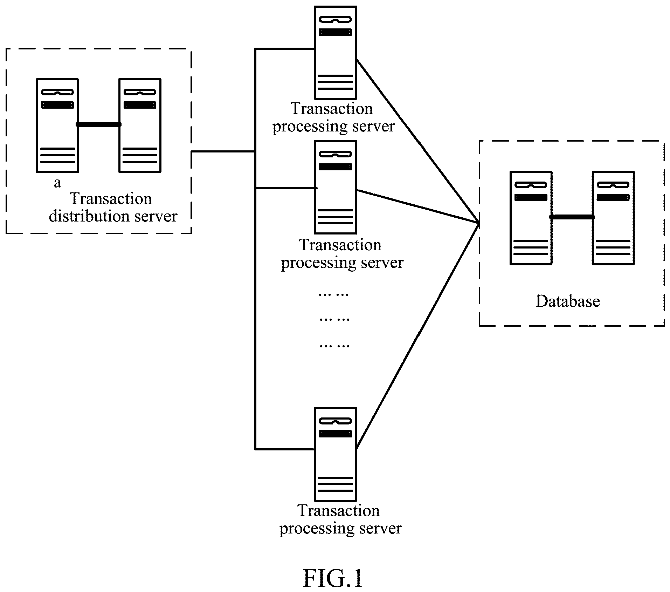

As shown in FIG.1, a cluster system for processing multi-node transaction comprises a transaction distribution server facing an external system, a plurality of transaction processing servers responsible for logic processing which are connected to the transaction distribution server, and a data base connected to the transaction processing servers.

The transaction distribution server adopts a dual device mode to ensure the security of the transaction distribution server; the transaction processing servers are spare parts for each other, each transaction processing server has the same function and adopts a single device mode so as to save the cost.

The transaction distribution server is used to transmit a request message received from the external system to a selected transaction processing server, and after detecting that a transaction processing server operates abnormally, distribute messages which are required to be transmitted to the transaction processing server to any one of other transaction processing servers.

The transaction distribution server performs different processing approaches according to different types of request messages when processing the request messages received from the external systems. The specific process will be described below.

### I. The request message is an initial request message.

When the request message is an initial request message, an association code is generated by the external system. Since each transaction processing server has the same processing capability, each transaction processing server may process messages normally, and create a buffer in the transaction processing server such that related data can be obtained when subsequent messages are processed. A fixed distribution rule is required to be adopted in order for subsequent non-initial request messages to be distributed to the same transaction processing server: a mapping rule for distribution is created based on the association code of the initial request message, and a mapping relationship between one or more bits of the association code and a transaction processing server number is created. The transaction distribution server obtains the transaction processing server number based on the mapping relationship between the association code and the transaction processing server by analyzing the association code so as to transmit the initial request message to the corresponding transaction processing server.

### II. The request message is a non-initial request message.

When the request message is a non-initial request message, since the non-initial request message is associated with the initial request message (by the association code), the transaction distribution server needs to distribute the non-initial request message to a transaction processing server where the initial request message is located for processing, and obtain memory data stored in the last request message. This second processing approach is further divided into the following two situations.
1. When an association code of the non-initial request message is generated by the external system, in order to solve the association between the initial request message and the non-initial request message, the same distribution rule as that for the initial request message is used for the non-initial request message: the transaction distribution server obtains the transaction processing server number based on the mapping relationship between one or more of bits of the association code of the non-initial request message and the transaction processing server so as to distribute the non-initial request message to the corresponding transaction processing server.
2. When the association code of the non-initial request message is generated by the transaction processing server, the association code may be distributed in a way of coding convention since the association code is generated by the cluster system itself. There is a mapping relationship between one or more of bits of the association code of the non-initial request message and the transaction processing server, and the transaction distribution server determines a transaction processing server based on the mapping relationship and transmits the non-initial request message to the selected transaction processing server.

The mapping mode, in which one or more of the bits of the association code of the non-initial request message correspond to the transaction processing server, used in the present invention to implement the scheme described above is simple and easy to do. For example, the last one or more of the bits of the association code may correspond to the transaction processing server number; or, the first one or more of the bits of the association code may correspond to the transaction processing server number; and so on.

The transaction distribution server, if a plurality of association codes is carried in the received request messages, distributes the messages in an order by firstly determining priorities of the association codes or distribution rules set by the system.

The transaction processing server is used to receive request messages from the transaction distribution server and process the messages; and generate an association code used to identify a subsequent non-initial request message based on the transaction processing server number when processing the initial request message.

The database adopting dual device mode to ensure the security is used to store and manage data uniformly.

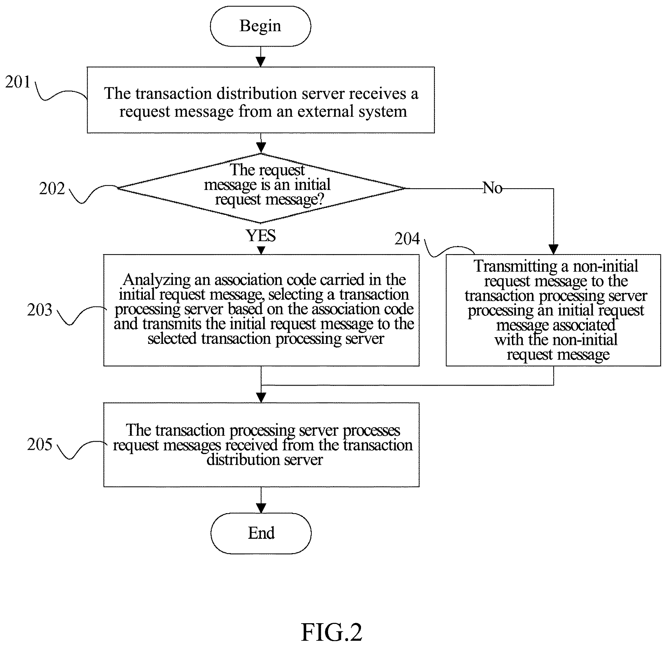

Corresponding to the system illustrated in FIG.1, a method for distributing transactional messages in a cluster system comprises: an initial request message, a non-initial request message with an association code being generated by an external system, and a non-initial request message with an association code being generated by a cluster system are distributed by analyzing the association code and by enquiring a mapping relationship between the association code and a transaction processing server number to obtain the number required to be distributed. In the case that a plurality of association codes are carried in one message, a transaction distribution server distributes the messages in an order by determining priorities of the association codes or distribution rules set by the system. As shown in FIG.2, the method for a cluster system to distribute request messages comprises the following steps.

Step 201, a transaction distribution server receives a request message from an external system.

Step 202, the transaction distribution server determines whether the request message is an initial request message; if yes, step 203 is performed; otherwise, the request message is a non-initial request message and step 204 is performed.

Step 203, the transaction distribution server analyzes an association code carried in the initial request message, selects a transaction processing server based on the association code and transmits the initial request message to the selected transaction processing server; step 205 is performed.

Step 204, the transaction distribution server transmits a non-initial request message to the transaction processing server processing an initial request message associated with the non-initial request message; step 205 is performed.

Step 205, the transaction processing server processes request messages received from the transaction distribution server; the process ends.

In the specific embodiment, the system shown in FIG.1 is typically suitable for a telecommunication value-added service cluster system. The technical scheme of the present invention will be described in detail below in conjunction with the specific embodiment of the telecommunication value-added service cluster system.

As shown in FIG.1, the transaction distribution server has only one set of equipment adopting the dual device mode, and is responsible for receiving authorization request messages sent by a service engine and distributing them to transaction processing servers; receiving authorization response messages returned from the transaction processing servers and forwarding them to the service engine. The transaction processing servers have a plurality of devices with identical functions, which adopt the single device mode, each device being a spare part for another device. The transaction processing server is responsible for receiving the authorization request messages forwarded by the transaction distribution server and performing authentication, authorization and accounting, and returning the processing result to the transaction distribution server.

The telecommunication value-added service system mainly is involved in authorization and billing request message and authorization and billing confirmation request message procedures. The authorization and billing confirmation processing procedure needs to use data stored in the authorization and billing request processing procedure, and both procedures are associated with each other through a globally unique recognition identifier field (i.e., association code) in the authorization request message, and the recognition identifier field is generated by a service engine and transferred to the telecommunication value-added service system through the authorization and billing request message and authorization and billing confirmation request message.

Different processing approaches will be described below according to different types of request messages.

When the request message is an on demand type service message, the transaction processing server may generate a transaction association identifier as an association code used to identify on demand initiated by a user and store related order relationship. The transaction association identifier is transferred to the transaction distribution server through an authorization and billing response message sent by the transaction processing server, and is further sent to the service engine by the transaction distribution server. The service engine may send messages to a cluster system using the transaction association identifier many times. The cluster system knows the related ordering relationship of a plurality of upstream messages associated with the transaction association identifier based on the transaction association identifier.

When the request message is an order type service message, the transaction processing server may generate a secondary confirmation access code as an association code. The cluster system notifies a user of the secondary confirmation access code through a short message, and the user transmits the content of reply to the secondary confirmation access code to confirm the order. The cluster system knows the related order relationship of the request messages associated with the secondary confirmation access code based on the secondary confirmation access code.

When the request message is a combination type service message, the transaction processing server may generate a combined service serial number as an association code to associate a plurality of request messages with each other. The cluster system knows temporarily buffered data of the plurality of request messages associated with the combined service serial number based on the combined service serial number.

The transaction processing server stores the temporary data involved in the request messages of the above authorization and billing confirmation procedure, on demand procedure, combination procedure and secondary confirmation procedure in the memory of the transaction processing server. Furthermore, when the transaction processing server generates a transaction association identifier, combined service serial number and secondary confirmation access code, the transaction processing server number is carried in one or more of bits of the transaction association identifier, combined service serial number and secondary confirmation access code.

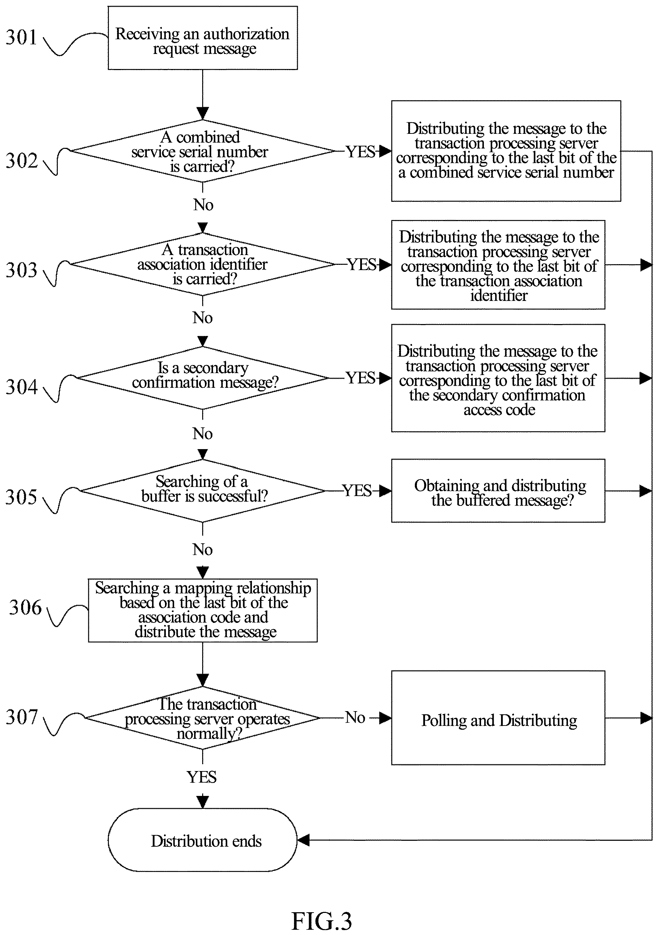

FIG.3 is a flowchart of a method for distribution of request messages in a telecommunication value-added cluster system. The specific embodiment will be described by taking a mapping relationship between the last bit of an association code and a transaction processing server number as an example. The method specifically comprises the following steps.

Step 301, a transaction distribution server receives an authorization request message sent by a service engine and analyzes the message.

Step 302, the transaction distribution server determines whether the authorization request message carries a combined service serial number based on the analyzing result of the message, if the combined service serial number is carried, finds the corresponding transaction processing server based on the last bit of the combined service serial number and distributes the request message; if the combined service serial number is not carried, step 303 is performed.

Step 303, the transaction distribution server determines whether the authorization request message carries a transaction association identifier based on the analyzing result of the message, if the transaction association identifier is carried, finds the corresponding transaction processing server based on the last bit of the transaction association identifier and distributes the request message; if the transaction association identifier is not carried, step 304 is performed.

Step 304, the transaction distribution server determines whether an access code in the authorization request message is a secondary confirmation access code based on the analyzing result of the message, if yes, finds the corresponding transaction processing server based on the last bit of the access code and distributes the request message; if not, step 305 is performed.

Step 305, the transaction distribution server searches a buffer based on an association code carried in the authorization request message and obtains a transaction processing server number stored in a memory. If the transaction processing server number stored in the buffer is found based on the association code, then the authorization request message is distributed to the corresponding transaction processing server; if it is not found in the buffer, step 306 is performed.

Step 306, the transaction distribution server obtains the transaction processing server number based on a mapping relationship between the last bit of other associated codes carried in the authorization request message and the transaction processing server, and distributes the authorization request message to the corresponding transaction processing server; step 307 is performed.

Step 307, if a distributed transaction processing server operates normally, the distribution ends. If the distributed transaction processing server operates abnormally, the transaction distribution server polls and distributes the authorization request message to other transaction processing servers, and the transaction processing server buffers data of the relationship between the association code and the transaction processing server number. The process ends.

In conclusion, in the invention, a cluster system based on a set of dual device transaction distribution server and a plurality of single device transaction processing servers utilizes furthest device resources to decrease the cost, and extends efficiently the processing capability of application systems, while solving the problem of distribution of associated messages in a transactional cluster system so as to improve greatly the whole processing capability by the system cluster and provide a firm foundation for systems such as telecommunication value-added service systems to realize data concentration and centralized processing.

Of course, the invention may have other various embodiments, and various corresponding modifications and variations to the present invention may be made by those skilled in the art, and these corresponding modifications and variations should all belong to the protection scope of the appended claims of the present invention.

## Claims

1. A cluster system for processing multi-node transaction comprising a transaction distribution server and transaction processing servers which are connected to the transaction distribution server, wherein
the transaction distribution server is configured to determine whether a request message received from an external system is an initial request message, and if yes, analyze an association code carried in the initial request message, select a transaction processing server based on the association code, and transmit the initial request message to the selected transaction processing server; and
the transaction processing server is configured to process the request message from the transaction distribution server,
wherein the transaction distribution server is further configured to, when determining that the request message is a non-initial request message, transmit the non-initial request message to a transaction processing server configured to process an initial request message associated with the non-initial request message;
wherein the transaction processing server is further configured to generate an association code used to identify a subsequent non-initial request message based on its own number when processing the initial request message; and
the transaction distribution server is further configured to, after determining that the request message is the non-initial request message, analyze the association code carried in the non-initial request message, and when determining that the association code is generated by a transaction processing server, select the transaction processing server based on the association code and transmit the non-initial request message to the selected transaction processing server;
**characterized in that** the transaction processing server is further configured to generate a transaction association identifier as the association code when the cluster system is a telecommunication value-added service cluster system and the received initial request message is an on demand type service message; and generate a secondary confirmation access code as the association code when the received initial request message is an order type service message; and generate a combined service serial number as the association code to associate a plurality of request messages with each other when the received initial request message is a combination type service message.

2. The cluster system according to claim 1, wherein the transaction distribution server is further configured to, after determining that the request message is the non-initial request message, analyze an association code carried in the non-initial request message, and when determining that the association code is generated by an external system, select a transaction processing server based on the association code and transmit the non-initial request message to the selected transaction processing server.

3. The cluster system according to any one of claims 1 to 2, wherein
a mapping relationship between the association code and the transaction processing server specifically means that one or more of bits of the association code correspond to a transaction processing server number.

4. The cluster system according to any one of claims 1 to 3, wherein
the transaction distribution server adopts a dual device mode, the transaction processing servers adopt a single device mode, and the transaction processing servers are spare parts for each other.

5. A request message distribution method for processing multi-node transaction comprising:
a transaction distribution server transmitting a request message received from an external system to a selected transaction processing server, and determining (202) whether the request message is an initial request message or a non-initial request message;
when the request message is the initial request message, analyzing (203) an association code carried in the initial request message, selecting (203) the transaction processing server based on the association code, and transmitting (203) the initial request message to the selected transaction processing server; and
the transaction processing server processing (205) the request message received from the transaction distribution server,
wherein further comprising:
when determining that the request message is the non-initial request message, the transaction processing server transmitting the non-initial request message to a transaction processing server configured to process an initial request message associated with the non-initial request message;
the specific transmitting process comprising: analyzing an association code carried in the non-initial request message, and when it is determined that the association code is generated by an external system, selecting a transaction processing server based on the association code and transmitting the non-initial request message to the selected transaction processing server,
wherein further comprising:
the transaction processing server generating an association code used to identify a subsequent non-initial request message based on its own number when processing the initial request message; and
the transaction distribution server, after determining that the request message is the non-initial request message, analyzing the association code carried in the non-initial request message, and when determining that the association code is generated by a transaction processing server, selecting the transaction processing server based on the association code and transmitting the non-initial request message to the selected transaction processing server,
**characterized in that** further comprising:
the transaction processing server generating a transaction association identifier as the association code when the cluster system is a telecommunication value-added service cluster system and the received initial request message is an on demand type service message; and generating a secondary confirmation access code as the association code when the received initial request message is an order type service message; and generating a combined service serial number as the association code to associate a plurality of request messages with each other when the received initial request message is a combination type service message.

## Patentansprüche

1. Clustersystem zur Verarbeitung von Mehrknotentransaktionen, umfassend einen Transaktionsverteilungsserver und Transaktionsverarbeitungsserver, die mit dem Transaktionsverteilungsserver verbunden sind, wobei der Transaktionsverteilungsserver dazu konfiguriert ist, zu bestimmen, ob es sich bei einer von einem externen System empfangenen Abfrage um eine initiale Abfrage handelt, und wenn ja, einen in der initialen Abfrage enthaltenen Assoziationscode zu analysieren, basierend auf dem Assoziationscode einen Transaktionsverarbeitungsserver auszuwählen und die initiale Abfrage an den ausgewählten Transaktionsverarbeitungsserver zu senden; und
der Transaktionsverarbeitungsserver dazu konfiguriert ist, dass er die Abfrage des Transaktionsverteilungsservers verarbeitet, wobei der Transaktionsverteilungsserver ferner dazu konfiguriert ist, dass er, wenn er bestimmt, dass es sich bei der Abfrage um eine nicht initiale Abfrage handelt, die nicht initiale Abfrage an einen Transaktionsverarbeitungsserver sendet, der dazu konfiguriert ist, eine initiale Abfrage zu verarbeiten, die der nicht initialen Abfrage zugeordnet ist; wobei der Transaktionsverarbeitungsserver ferner dazu konfiguriert ist, dass er einen Assoziationscode generiert, der dazu verwendet wird, beim Verarbeiten der initialen Abfrage eine nachfolgende, nicht initiale Abfrage basierend auf ihrer eigenen Nummer zu identifizieren; und
der Transaktionsverteilungsserver ferner dazu konfiguriert ist, dass er nach dem Bestimmen, dass es sich bei der Abfrage um eine nicht initiale Abfrage handelt, den in der nicht initialen Abfrage enthaltenen Assoziationscode analysiert, und wenn bestimmt wird, dass der Assoziationscode von einem Transaktionsverarbeitungsserver generiert wird, den Transaktionsverarbeitungsserver basierend auf dem Assoziationscode auswählt und die nicht initiale Abfrage an den ausgewählten Transaktionsverarbeitungsserver sendet;
**dadurch gekennzeichnet, dass** der Transaktionsverarbeitungsserver ferner dazu konfiguriert ist, dass er eine Transaktionsassoziationskennung als Assoziationscode generiert, wenn es sich bei dem Clustersystem um ein Telekommunikations-Mehrwertdienst-Clustersystem und bei der empfangenen initialen Abfrage um eine bedarfsgesteuerte Servicemeldung handelt; und einen sekundären Bestätigungszugangscode als Assoziationscode generiert, wenn es sich bei der empfangenen initialen Abfrage um eine planmäßige Servicemeldung handelt; und eine kombinierte Serviceseriennummer als Assoziationscode generiert, um eine Vielzahl von Abfragen einander zuzuordnen, wenn die empfangene initiale Abfrage eine Servicemeldung vom Kombinationstyp ist.

2. Clustersystem nach Anspruch 1, wobei der Transaktionsverteilungsserver außerdem dazu konfiguriert ist, dass er nach dem Bestimmen, dass es sich bei der Abfrage um die nicht initiale Abfrage handelt, den in der nicht initialen Abfrage enthaltenen Assoziationscode analysiert, und wenn er bestimmt, dass der Assoziationscode von einem externen System generiert ist, basierend auf dem Assoziationscode einen Transaktionsverarbeitungsserver auswählt und die nicht initiale Abfrage an den ausgewählten Transaktionsverarbeitungsserver sendet.

3. Clustersystem nach einem der Ansprüche 1 bis 2, wobei eine Mapping-Beziehung zwischen dem Assoziationscode und dem Transaktionsverarbeitungsserver insbesondere bedeutet, dass ein oder mehrere Bits des Assoziationscodes mit einer Nummer des Transaktionsverarbeitungsservers übereinstimmen.

4. Clustersystem nach einem der Ansprüche 1 bis 3, wobei der Transaktionsverteilungsserver einen Doppelgerätmodus annimmt und der Transaktionsverarbeitungsserver einen Einzelgerätmodus annimmt, und die Transaktionsverarbeitungsserver als Ersatzteile füreinander dienen.

5. Abfrageverteilungsverfahren zum Verarbeiten von Mehrknotentransaktionen, umfassend:
einen Transaktionsverteilungsserver, der eine von einem externen System empfangene Abfrage an einen ausgewählten Transaktionsverarbeitungsserver sendet, und bestimmt (202), ob es sich bei der Abfrage um eine initiale Abfrage oder um eine nicht initiale Abfrage handelt;
wenn die Abfrage eine initiale Abfrage ist, einen in der initialen Abfrage enthaltenen Assoziationscode analysiert (203), den Transaktionsverarbeitungsserver basierend auf dem Assoziationscode auswählt (203) und die initiale Abfrage an den ausgewählten Transaktionsverarbeitungsserver sendet (203); und
den Transaktionsverarbeitungsserver, der die vom Transaktionsverteilungsserver empfangene Abfrage verarbeitet (205),
wobei ferner Folgendes umfassend:
wenn bestimmt wird, dass es sich bei der Abfrage um eine nicht initiale Abfrage handelt, sendet der Transaktionsverarbeitungsserver die nicht initiale Abfrage an einen Transaktionsverarbeitungsserver, der dazu konfiguriert ist, dass er eine initiale Abfrage, die der nicht initialen Abfrage zugeordnet ist, verarbeitet;
wobei der spezifische Sendeprozess Folgendes umfasst: Analysieren eines in der nicht initialen Abfrage enthaltenen Assoziationscodes und, wenn bestimmt wird, dass der Assoziationscode von einem externen System generiert ist, Auswählen eines Transaktionsverarbeitungsservers basierend auf dem Assoziationscode und Senden der nicht initialen Abfrage an den ausgewählten Transaktionsverarbeitungsserver,
wobei ferner Folgendes umfassend:
der Transaktionsverarbeitungsserver generiert einen Assoziationscode, der bei der Verarbeitung der initialen Abfrage zur Identifizierung einer nachfolgenden, nicht initialen Abfrage basierend auf ihrer eigenen Nummer verwendet wird; und
der Transaktionsverteilungsserver analysiert nach dem Bestimmen, dass es sich bei Abfrage um die nicht initiale Abfrage handelt, den Assoziationscode, der in der nicht initialen Abfrage enthalten ist, und wenn bestimmt wird, dass der Assoziationscode von einem Transaktionsverarbeitungsserver generiert ist, wählt er den Transaktionsverarbeitungsserver basierend auf dem Assoziationscode aus und sendet die nicht initiale Abfrage an den ausgewählten Transaktionsverarbeitungsserver,
**dadurch gekennzeichnet, dass** ferner Folgendes umfasst ist:
der Transaktionsverarbeitungsserver generiert eine Transaktionsassoziationskennung als Assoziationscode, wenn es sich bei dem Clustersystem um ein Telekommunikations-Mehrwertdienst-Clustersystem und bei der empfangenen initialen Abfrage um eine bedarfsgesteuerte Servicemeldung handelt; und
generiert einen sekundären Bestätigungszugangscode als Assoziationscode, wenn es sich bei der empfangenen initialen Abfrage um eine planmäßige Servicemeldung handelt; und generiert eine kombinierte Serviceseriennummer als Assoziationscode, um eine Vielzahl von Abfragen einander zuzuordnen, wenn die empfangene initiale Abfrage eine Servicemeldung vom Kombinationstyp ist.

## Revendications

1. Système de grappe pour traiter une transaction multinoeud comprenant un serveur de distribution de transaction et des serveurs de traitement de transaction qui sont connectés au serveur de distribution de transactions, dans lequel
le serveur de distribution de transaction est configuré pour déterminer si un message de requête reçu à partir d'un système externe est un message de requête initiale, et le cas échéant, pour analyser un code d'association contenu dans le message de requête initiale, sélectionner un serveur de traitement de transaction sur la base du code d'association, et transmettre le message de requête initiale au serveur de traitement de transaction sélectionné ; et
le serveur de traitement de transaction est configuré pour traiter le message de requête du serveur de distribution de transaction,
dans lequel le serveur de distribution de transaction est en outre configuré, lorsqu'il est déterminé que le message de requête est un message de requête non initiale, pour transmettre le message de requête non initiale à un serveur de traitement de transaction configuré pour traiter un message de requête initiale associé au message de requête non initiale ;
dans lequel le serveur de traitement de transaction est en outre configuré pour générer un code d'association utilisé pour identifier un message de requête non initiale ultérieur sur la base de son propre numéro lors du traitement du message de requête initiale ; et
le serveur de distribution de transaction est en outre configuré, après avoir déterminé que le message de requête est le message de requête non initiale, pour analyser le code d'association contenu dans le message de requête non initiale, et lorsqu'il est déterminé que le code d'association est généré par un serveur de traitement de transaction, pour sélectionner le serveur de traitement de transaction sur la base du code d'association et transmettre le message de requête non initiale au serveur de traitement de transaction sélectionné ;
**caractérisé en ce que** le serveur de traitement de transaction est en outre configuré pour générer un identifiant d'association de transaction comme étant le code d'association lorsque le système de grappe est un système de grappe de services à valeur ajoutée de télécommunication et le message de requête initiale reçu est un message de service de type à la demande ; et pour générer un code d'accès de confirmation secondaire comme étant le code d'association lorsque le message de requête initiale reçu est un message de service de type d'ordre ; et générer un numéro de série de service combiné comme étant le code d'association pour associer une pluralité de messages de requête les uns aux autres lorsque le message de requête initiale reçu est un message de service de type combiné.

2. Système de grappe selon la revendication 1, dans lequel le serveur de distribution de transaction est en outre configuré, après avoir déterminé que le message de requête est le message de requête non initiale, pour analyser un code d'association contenu dans le message de requête non initiale, et lorsqu'il est déterminé que le code d'association est généré par un système externe, pour sélectionner un serveur de traitement de transaction sur la base du code d'association et transmettre le message de requête non initiale au serveur de traitement de transaction sélectionné.

3. Système de grappe selon l'une quelconque des revendications 1 et 2, dans lequel
une relation de correspondance entre le code d'association et le serveur de traitement de transaction signifie spécifiquement qu'un ou plusieurs des bits du code d'association correspond/correspondent à un numéro de serveur de traitement de transaction.

4. Système de grappe selon l'une quelconque des revendications 1 à 3, dans lequel
le serveur de distribution de transaction adopte un mode à deux dispositifs, les serveurs de traitement de transaction adoptent un mode à un seul dispositif et les serveurs de traitement de transaction sont des pièces de rechange les uns pour les autres.

5. Procédé de distribution de message de requête pour traiter une transaction multinoeud comprenant le fait :
par le biais d'un serveur de distribution de transaction, de transmettre un message de requête reçu à partir d'un système externe à un serveur de traitement de transaction sélectionné et de déterminer (202) si le message de requête est un message de requête initiale ou un message de requête non initiale ;
lorsque le message de requête est le message de requête initiale, d'analyser (203) un code d'association contenu dans le message de requête initiale, de sélectionner (203) le serveur de traitement de transaction sur la base du code d'association et de transmettre (203) le message de requête initiale au serveur de traitement de transaction sélectionné ; et
de traiter, par le biais du serveur de traitement de transaction (205), le message de requête reçu à partir du serveur de distribution de transaction,
comprenant en outre le fait :
lorsqu'il est déterminé que le message de requête est le message de requête non initiale, de transmettre, par le biais du serveur de traitement de transaction, le message de requête non initiale à un serveur de traitement de transaction configuré pour traiter un message de requête initiale associé au message de requête non initiale ;
le processus de transmission spécifique comprenant le fait : d'analyser un code d'association contenu dans le message de requête non initiale, et lorsqu'il est déterminé que le code d'association est généré par un système externe, de sélectionner un serveur de traitement de transaction sur la base du code d'association et de transmettre le message de requête non initiale au serveur de traitement de transaction sélectionné,
comprenant en outre le fait :
de générer, par le biais du serveur de traitement de transaction, un code d'association utilisé pour identifier un message de requête non initiale ultérieur sur la base de son propre numéro lors du traitement du message de requête initiale ; et
par le biais du serveur de distribution de transaction, après avoir déterminé que le message de requête est le message de requête non initiale, d'analyser le code d'association contenu dans le message de requête non initiale et, lorsqu'il est déterminé que le code d'association est généré par un serveur de traitement de transaction, de sélectionner le serveur de traitement de transaction sur la base du code d'association et de transmettre le message de requête non initiale au serveur de traitement de transaction sélectionné,
**caractérisé en ce qu'**il comprend en outre le fait :
par le biais du serveur de traitement de transaction, de générer un identifiant d'association de transaction comme étant le code d'association lorsque le système de grappe est un système de grappe de services à valeur ajoutée de télécommunication et le message de requête initiale reçu est un message de service de type à la demande ; et de générer un code d'accès de confirmation secondaire comme étant le code d'association lorsque le message de requête initiale reçu est un message de service de type d'ordre ; et de générer un numéro de série de service combiné comme étant le code d'association pour associer une pluralité de messages de requête les uns aux autres lorsque le message de requête initiale reçu est un message de service de type combiné.
